# EUROPEAN PATENT APPLICATION

(11) **EP 4 704 414 A1**
(43) Date of publication of application: **04.03.2026**
(21) Application number: 25194833.7
(22) Date of filing: 08.08.2025
(51) Int. Cl.: H04N 1/40, H04N 1/409, H04N 1/60

(54) **IMAGE PROCESSING APPARATUS AND IMAGE FORMING APPARATUS**

(30) Priority: 26.08.2024 JP 2024145010
(71) Applicant: KYOCERA Document Solutions Inc., Osaka-shi, Osaka 540-8585 (JP)
(72) Inventor: MAMURA, Toshiki, Osaka-shi, Osaka, 540-8585 (JP)
(74) Representative: Herrero & Asociados, S.L.

(57) **Abstract**

An image processing apparatus (1) includes an intermediate image generator (101) configured to generate intermediate image data with the same resolution in both scanning directions by performing resolution conversion on read image data obtained by reading a document with a document reading device (5), a character area detector (102) configured to detect a character area within an image represented by the intermediate image data, an image corrector (104) configured to correct the intermediate image data so that a density of low-density character areas having a density lower than a predetermined reference density is increased and a density of high-density character areas having a density higher than the reference density is decreased in the character area, and an output image generator (105) configured to convert the resolution of the corrected intermediate image data into a predetermined output resolution and generate output image data.

## Description

### BACKGROUND

The present invention relates to an image processing apparatus and an image forming apparatus including a document reading device that reads an image of a document.

In a copier, a multifunction machine with a copy function, or the like, when a document is read at a high resolution (e.g., 600×600 dpi or higher), the reproducibility of the print is improved. However, when a document is read at a low resolution (e.g., 300×300 dpi), the reproducibility of the print is generally reduced. Therefore, a high resolution is used to read the document instead of a low resolution so that the image quality of an output image is improved.

### SUMMARY

As an aspect of the present invention, a technique for further improving the above-described technique is proposed.

According to an aspect of the present invention, an image processing apparatus includes a document reading device and a control device. The document reading device reads an image of a document at a different resolution in accordance with each of a main scanning direction and a sub-scanning direction. The control device includes a processor and functions as an intermediate image generator, a character area detector, an image corrector, and an output image generator when the processor executes a control program. The intermediate image generator generates intermediate image data with the same resolution in both scanning directions by performing resolution conversion on read image data obtained by reading the document with the document reading device. The character area detector detects a character area within an image represented by the intermediate image data generated by the intermediate image generator. The image corrector corrects the intermediate image data by increasing a density of low-density character areas having a density lower than a predetermined reference density by a predetermined first density amount and decreasing a density of high-density character areas having a density higher than the reference density by a predetermined second density amount in the character area detected by the character area detector. The output image generator generates output image data by converting the resolution of the intermediate image data corrected by the image corrector into a predetermined output resolution.

An image forming apparatus according to an aspect of the present invention includes the image processing apparatus according to one aspect of the present invention and an image forming device. The image forming device forms an image on a recording medium on the basis of output image data generated by an output image generator.

### BRIEF DESCRIPTION OF THE DRAWINGS

FIG. 1 is a functional block diagram schematically showing a main internal configuration of an image forming apparatus to which an image processing apparatus according to an embodiment of the present disclosure is applied.
FIG. 2A and FIG. 2B are diagrams showing images of read image data obtained by reading a document with a document reading device.
FIG. 3A and FIG. 3B are diagrams showing examples of a corresponding relationship between an input density value and an output density value.
FIG. 4A to FIG. 4D are diagrams showing the transition of data until output image data is generated from read image data obtained by reading a document with the document reading device.
FIG. 5A to FIG. 5C are diagrams showing the transition of data until output image data is generated from read image data obtained by reading a document with the document reading device as a comparative example.
FIG. 6 is a flowchart showing an example of a process performed by the control device of the image forming apparatus.

### DETAILED DESCRIPTION

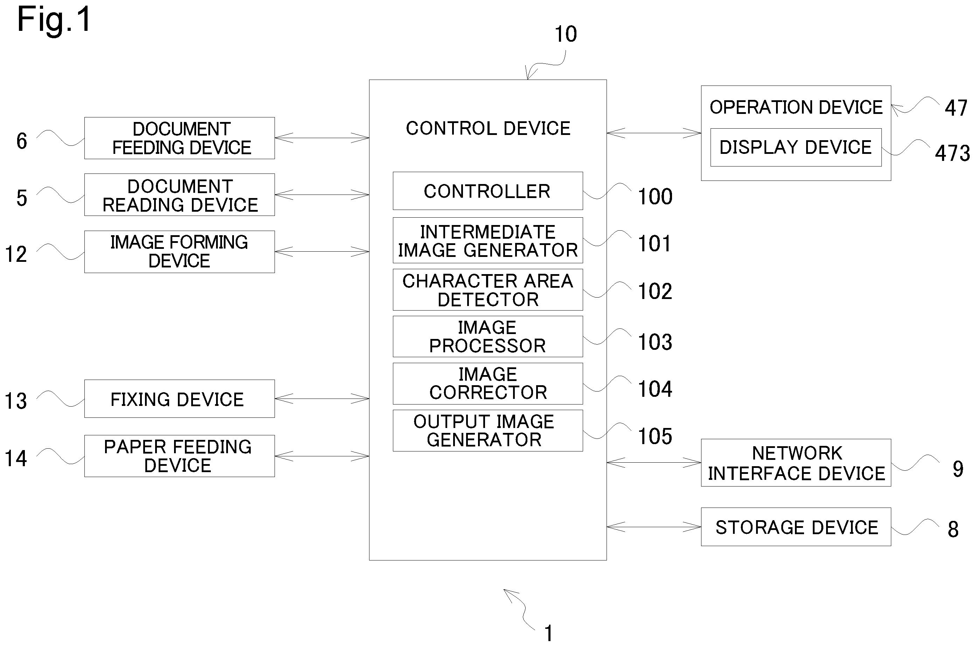

Hereinafter, an image processing apparatus and an image forming apparatus according to an embodiment of the present invention will be described with reference to the drawings. FIG. 1 is a functional block diagram schematically showing a main internal configuration of the image forming apparatus to which the image processing apparatus according to an embodiment of the present invention is applied. The image forming apparatus 1 is a multifunction machine having a plurality of functions such as a copy function, a printer function, a scanner function, and a facsimile function.

The image forming apparatus 1 is configured to include a control device 10, a document feeding device 6, a document reading device 5, an image forming device 12, a fixing device 13, a paper feeding device 14, an operation device 47, a network interface device 9, and a storage device 8.

The document feeding device 6 is configured to be openable and closable by means of a hinge or the like (not shown) on the top surface of the document reading device 5 and the document feeding device 6 functions as a document pressing cover when a document placed on a platen glass (not shown) is read. Moreover, the document feeding device 6 is referred to as an auto document feeder (ADF), and includes a document placement tray (not shown), and supplies the document placed on the document placement tray to the document reading device 5.

The document reading device 5 has a plurality of image pickup elements arrayed in a main scanning direction, and includes a scanner configured to read an image of a document by moving the plurality of image pickup elements in a sub-scanning direction perpendicular to the main scanning direction and the like. The document reading device 5 is capable of reading the image of the document at different resolutions in the scanning directions and reads the document fed from the document feeding device 6 or reads the document placed on the platen glass. Moreover, the document reading device 5 is capable of sequentially reading a plurality of document images fed from the document feeding device 6.

A case where the document reading operation is performed in the image forming apparatus 1 will be described. The document reading device 5 optically reads the image of the document fed to the document reading device 5 by the document feeding device 6 or the document placed on the platen glass and generates read image data. The read image data generated by the document reading device 5 is held in an image memory or the like (not shown).

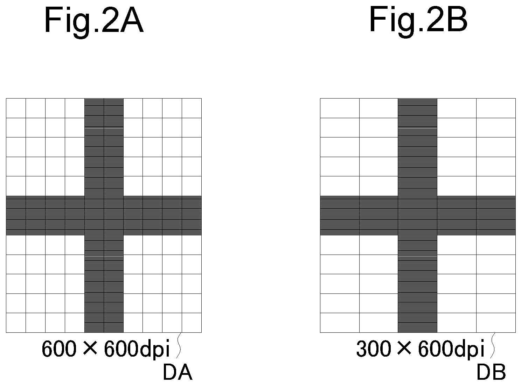

FIG. 2A and FIG.2B are diagrams showing images of read image data obtained by reading a document with the document reading device 5. FIG. 2A is a diagram showing an image of read image data DA obtained when a document is read at the same resolution (600×600 dpi) in the main scanning direction and the sub-scanning direction. FIG. 2B is a diagram showing an image of read image data DB obtained when a document is read at a resolution (300×600 dpi) that differs according to the scanning direction. In the image shown in FIG. 2B, a pixel length in the main scanning direction (a horizontal direction in the drawing) is twice that in the sub-scanning direction (a vertical direction in the drawing). Hereinafter, when numerical values of the resolution are indicated, they are indicated in the order of the main scanning direction and the sub-scanning direction.

A case where an image forming operation is performed by the image forming apparatus 1 will be described. The image forming device 12 is a mechanism that includes a photoconductor drum, a charging apparatus, an exposure apparatus, a developing apparatus, and a primary transfer apparatus for each color, and forms an image on recording paper as a recording medium by a secondary transfer via an intermediate transfer belt. The image forming device 12 creates a printed material by forming a toner image on recording paper fed from the paper feeding device 14 on the basis of image data generated by the document reading operation, image data stored in an image memory or the like, and image data received from a computer connected to a network.

The fixing device 13 is a fixing apparatus including a heat roller, a pressure roller, and a drive mechanism for rotating these, and heats and presses the recording paper on which the toner image has been formed by the image forming device 12 at a nip between the above-described two rollers, thereby fixing the toner image to the recording paper, and the recording paper after the fixing process is discharged to an output tray (not shown).

The paper feeding device 14 includes a paper feed cassette (not shown) and further includes a pickup roller that picks up the recording paper from the paper feed cassette and feeds the recording paper to the image forming device 12, a transport roller, a transport path, and a rotation drive mechanism for each roller.

The operation device 47 has various types of hard keys operated by a user, and receives instructions such as instructions to execute image forming operations from the user with respect to various types of operations and processes that the image forming apparatus 1 can execute in accordance with the operation of the hard keys.

The operation device 47 has a display device 473 that displays an operation guide for an operator. Moreover, the operation device 47 receives the input of instructions from the user on the basis of the user's operation (touch operation) on the screen displayed on the display device 473 via the touch panel of the display device 473.

The display device 473 is made up of a liquid crystal display (LCD) or the like. When the operator touches a button or key displayed on the screen, the touch panel receives an instruction associated with a position where a touch operation has been performed. In this case, the touch panel functions as the operation device.

The network interface device 9 is a communication interface that transmits and receives various data to and from an external apparatus (e.g., a personal computer) within a local area or on the Internet.

The storage device 8 is a large-capacity storage apparatus such as a hard disk drive (HDD) or solid-state drive (SSD), and stores various types of control programs and the like.

The control device 10 is configured to include a processor, a random-access memory (RAM), a read-only memory (ROM), and a dedicated hardware circuit. The processor is, for example, a central processing unit (CPU), an application specific integrated circuit (ASIC), a micro processing unit (MPU), or the like. The control device 10 includes a controller 100, an intermediate image generator 101, a character area detector 102, an image processor 103, an image corrector 104, and an output image generator 105.

The control device 10 functions as the controller 100, the intermediate image generator 101, the character area detector 102, the image processor 103, the image corrector 104, and the output image generator 105 through the operation of the processor according to the control program stored in the storage device 8 or the like. However, the controller 100 or the like can also be configured to include a hardware circuit, regardless of the operation in accordance with the control program by the control device 10. Unless otherwise stated below, the same is true for each embodiment.

The controller 100 is responsible for the overall operation control of the image forming apparatus 1. The controller 100 is connected to the document feeding device 6, the document reading device 5, the image forming device 12, the fixing device 13, the paper feeding device 14, the operation device 47, the network interface device 9, and the storage device 8. The controller 100 performs a process of controlling the driving of these devices and the like and executes various processes required for image formation by the image forming apparatus 1 and the like.

The intermediate image generator 101 performs resolution conversion on the read image data DB (FIG. 2B) obtained by reading the document with the document reading device 5, thereby generating intermediate image data with the same resolution in both scanning directions. The intermediate image generator 101 converts the resolution of the read image data in the other scanning direction according to the smaller of the resolution in the main scanning direction and the resolution in the sub-scanning direction. In the present embodiment, the document reading device 5 reads the document at different predetermined resolutions in the main scanning direction and the sub-scanning direction (here, 300×600 dpi is used as an example), and the intermediate image generator 101 generates the intermediate image data by converting the read image data with the resolution at the time of reading into, for example, 300×300 dpi.

The character area detector 102 detects the character area in the image represented by the intermediate image data generated by the intermediate image generator 101. For example, the character area detector 102 uses a known area determination technique to determine a character area where characters are drawn and a graphic area (an area other than the character area) where a photograph, diagram, or table is drawn from the pixel information of the intermediate image data. For example, the character area detector 102 uses a known area determination technique to recognize a circumscribing rectangle of connected pixels that is smaller than a predetermined size as a character area and recognizes a portion that is not smaller as the graphic area.

The image processor 103 performs various types of image processing on the intermediate image data generated by the intermediate image generator 101. For example, the image processor 103 performs a known edge enhancement process on the intermediate image data of the character area detected by the character area detector 102, and performs a known smoothing process on the intermediate image data other than the character area.

The image corrector 104 corrects the intermediate image data by increasing a density of low-density character areas LA having a density lower than a predetermined reference density RC by a predetermined first density amount and decreasing a density of high-density character areas HA having a density higher than the reference density RC by a predetermined second density amount in the character area detected by the character area detector 102. For example, the image corrector 104 corrects the intermediate image data on the basis of a predetermined input/output characteristic indicating a relationship between an input density value VI and an output density value VO. Moreover, for example, the predetermined reference density RC is a pixel value of 190 or a value around 190 in the case of a 256-gradation image representation (a pixel value of 0 to 255).

The above-described predetermined input/output characteristic is set so that the output density value VO increases or remains the same without decreasing as the input density value VI increases. The above-described input/output characteristic is set so that (i) the output density value VO is greater than the input density value VI and less than the reference density RC when the input density value VI is less than the reference density RC. The above-described input/output characteristic is set so that (ii) the output density value VO is less than the input density value VI and greater than the reference density RC when the input density value VI is greater than the reference density RC. That is, the image corrector 104 determines the above-described predetermined first density amount according to the above-described (i) and determines the above-described predetermined second density amount according to the above-described (ii).

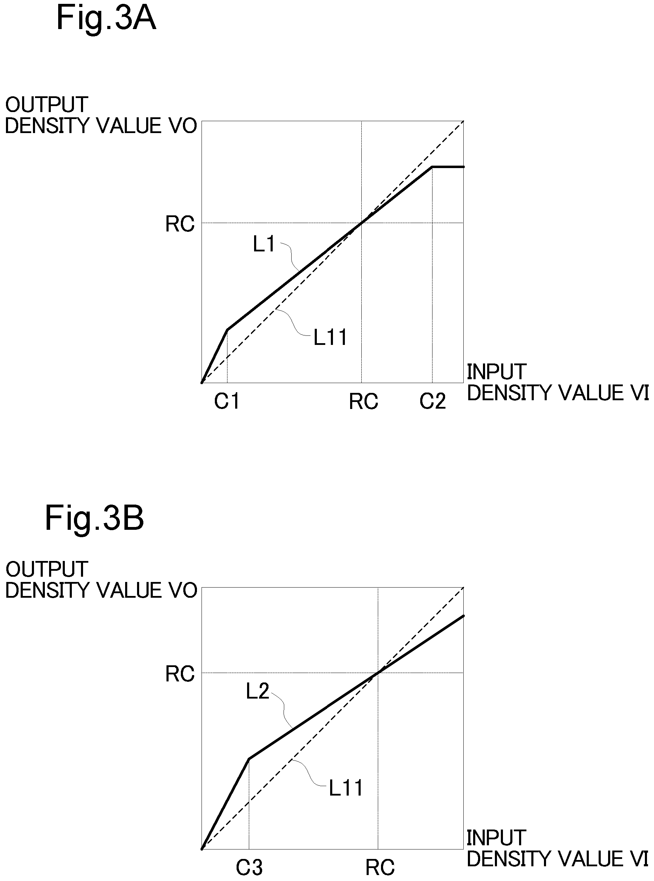

FIG. 3A and FIG.3B show examples of input/output characteristics and are diagrams showing an example of a corresponding relationship between the input density value VI and the output density value VO. The horizontal axis represents the input density value VI, the vertical axis represents the output density value VO, and a dashed line L11 indicates the case where the input density value VI and the output density value VO are equal.

The input/output characteristics indicated by solid lines L1 and L2 have the above-described predetermined input/output characteristics. That is, in the present embodiment, one of the input/output characteristics indicated by the solid lines L1 and L2 can be adopted. The input/output characteristic indicated by the solid line L1 is set so that the output density value VO increases linearly in accordance with the input density value VI, the slope changes to a smaller slope at a density value C1, and the slope changes to 0 at a density value C2. That is, the input/output characteristic indicated by the solid line L2 is set so that the output density value VO increases linearly in accordance with the input density value VI, and the slope changes to a smaller slope at a density value C3.

The output image generator 105 converts the resolution of the intermediate image data corrected by the image corrector 104 (300×300 dpi is used as an example here) into a predetermined output resolution (600×600 dpi is used as an example here) and generates output image data. For example, the output image generator 105 generates output image data from the corrected intermediate image data using a known gradation processing technique (such as an error diffusion method).

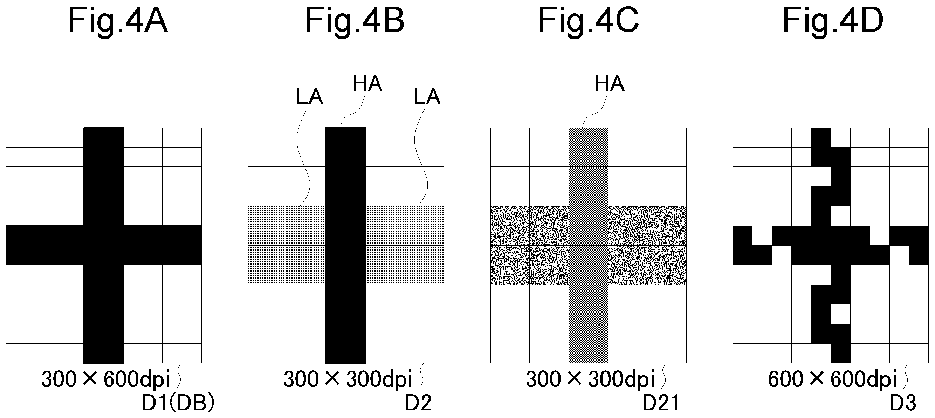

FIG. 4A to FIG.4D are diagrams showing the transition of data until output image data is generated from read image data obtained by reading a document with the document reading device 5 through image processing according to the present embodiment. In addition, images are expressed as multi-value images in FIG. 4A to FIG.4C, and images are expressed as binary images in FIG. 4D.

FIG. 4A is a diagram showing an image of a character area included in the read image data D1 (DB) obtained by the document reading device 5 reading a document at a resolution (300×600 dpi) that differs according to the scanning direction. In the image shown in FIG. 4A, a pixel length in the main scanning direction (a horizontal direction in the drawing) is twice that in the sub-scanning direction (a vertical direction in the drawing).

FIG. 4B is a diagram showing an image of intermediate image data D2 (resolution: 300×300 dpi) that has the same resolution in both scanning directions and is generated by the intermediate image generator 101 performing resolution conversion on the read image data D1. Because a pixel length in the sub-scanning direction (a vertical direction in the drawing) of the intermediate image data D2 is twice that in the read image data D1, the image density of horizontal lines is lower.

Because the horizontal pixel length in the drawing does not change, a vertical line character area (solid black area) remains solid black (a high-density character area HA). However, because a vertical pixel length in the drawing doubles, a horizontal line character area (a solid black area) is converted into a gray area (a low-density character area LA). In FIG. 4B, an image part with a low density is expressed in gray.

FIG. 4C is a diagram showing an image of intermediate image data D21 obtained by a correction process of the image corrector 104. The image corrector 104 generates the intermediate image data D21 by correcting intermediate image data D2 so that a density of the low-density character areas LA having a density lower than the predetermined reference density RC is increased and a density of the high-density character areas HA having a density higher than the reference density RC is decreased on the basis of the above-described input/output characteristics (here, FIG. 3A). The intermediate image data D21 has a higher image density of horizontal lines and a lower image density of vertical lines than the intermediate image data D2.

That is, because the pixels constituting the image are slightly thinned out and a change from the solid black area to a gray area is made within the high-density character area HA of vertical lines (a solid black area) and the pixels constituting the image are slightly interpolated and the gray area is made darker in the low-density character area LA of horizontal lines (a gray area), a balance of vertical and horizontal densities is improved.

FIG. 4D is a diagram showing an image of output image data D3 generated by the output image generator 105 converting the resolution of intermediate image data D21 into a predetermined output resolution (600×600 dpi).

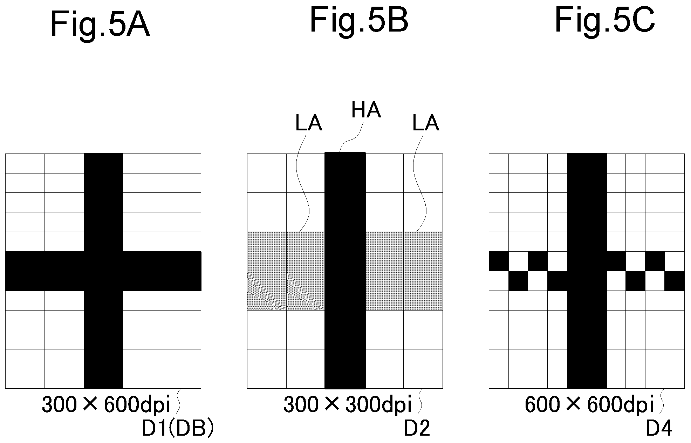

FIG. 5A to FIG.5C are diagrams showing the transition of data until output image data is generated from read image data obtained by reading a document with the document reading device 5 through image processing as a comparative example different from the present embodiment. In addition, FIG. 5A and FIG.5B show image diagrams using a multi-value image and FIG. 5C shows an image diagram using a binary image.

FIG. 5A is a diagram showing an image of a character area included in read image data D1 (DB) obtained by document reading device 5 reading a document at a resolution (300×600 dpi) that differs according to the scanning direction. FIG. 5B is a diagram showing an image of intermediate image data D2 (resolution: 300×300 dpi) that has the same resolution in both scanning directions and is generated by performing resolution conversion on the read image data D1. Up to this point, FIG. 5A and FIG.5B are similar to FIG. 4A and FIG.4B based on the image processing according to the present embodiment.

FIG. 5C is a diagram showing an image of output image data D4 generated by converting the resolution of intermediate image data D2 into a predetermined output resolution (600×600 dpi). In the comparative example, unlike the image processing according to the present embodiment, the image corrector 104 does not generate the intermediate image data D21, and the resolution conversion process for the output resolution in which intermediate image data D21 is set as a target is not performed. The resolution conversion process for the output resolution in which the intermediate image data D2 is set as a target is performed and output image data D4 is generated.

In the output image data D4 of the comparative example shown in FIG. 5C, thinning is present in the horizontal direction but thinning is not present in the vertical direction, so that the vertical and horizontal density balance is poor. On the other hand, in output image data D3 by the image processing of the present embodiment shown in FIG. 4D, thinning can be performed to the same extent in both the horizontal and vertical directions, so that the vertical and horizontal density balance is good.

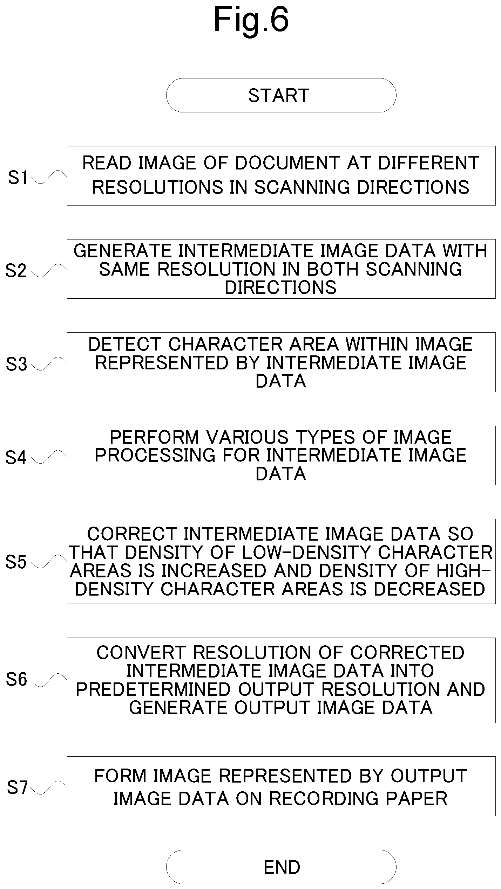

Next, the image processing and image formation according to the present embodiment will be described using the flowchart shown in FIG. 6. In addition, this process is performed when the operation device 47 receives a copy instruction from the user such as when a document is placed on the platen glass.

When the operation device 47 receives a copy instruction from the user, the controller 100 controls the operation of the document reading device 5 so that the document reading device 5 reads the image of the document placed on the platen glass at a predetermined resolution (the above-described 300×600 dpi is used as an example) that differs according to the scanning direction (S1).

Subsequently, the intermediate image generator 101 generates intermediate image data D2 with the same resolution in both scanning directions by performing resolution conversion (using the above-described 300×300 dpi as an example) on the read image data D1 obtained by reading the document with the document reading device 5 (S2).

The character area detector 102 detects a character area within the image represented by the intermediate image data D2 generated by the intermediate image generator 101 (S3). The image processor 103 performs an edge enhancement process on the intermediate image data of the character area with respect to the intermediate image data D2 generated by the intermediate image generator 101 and performs a smoothing process on the intermediate image data other than the character area (S4).

On the basis of the above-described input/output characteristics, the image corrector 104 corrects the intermediate image data D21 so that the density of the low-density character areas LA having a density lower than the predetermined reference density RC is increased and the density of the high-density character areas HA having a density higher than the reference density RC is decreased, in the character area in the image represented by the intermediate image data D2 on which image processing has been performed by the image processor 103 (S5).

The output image generator 105 converts the resolution of the intermediate image data D21 corrected by the image corrector 104 into a predetermined output resolution (600×600 dpi) and generates output image data D3 (S6). The controller 100 controls the image forming device 12, the paper feeding device 14, and the fixing device 13 so that an image is formed on a recording paper on the basis of the output image data D3 generated by the output image generator 105 (S7). Subsequently, the process ends.

According to the above-described embodiment, the pixel thinning in this character area is decreased by increasing the density of the low-density character area LA (a character area with a large amount of pixel thinning) and the pixel thinning in this character area is increased by decreasing the density of the high-density character area HA (a character area without any pixel thinning or a small amount of pixel thinning). Thereby, it is possible to achieve the same degree of thinning in both character areas and it is possible to avoid differences in the reproduction of details in the main scanning direction and the sub-scanning direction.

Therefore, when the file size is reduced by reading the document at different resolutions in accordance with the scanning direction and the document image is output after high-resolution conversion is performed to make the resolution in both scanning directions the same, it is possible to suppress deterioration in the image quality of the output image.

Here, according to a general document reading method, unlike the above-described embodiment, when a document is read at a high resolution, the file size of the read image data obtained by reading becomes large, which is not preferable for internal image processing such as image transfer and image storage. For this reason, because the document may be read at a different resolution according to the scanning direction (e.g., 300×600 dpi), the file size of the read image data may be reduced.

Moreover, the read image data obtained by reading the document at a different resolution according to the scanning direction may be subjected to resolution conversion, such that an output process such as a print process is performed after the resolution is made the same in both scanning directions (e.g., 300×300 dpi).

In this way, when an image is output after resolution conversion for making the resolution the same is performed regardless of the above-described embodiment, differences in the reproducibility of details may occur between the main scanning direction and the sub-scanning direction, the vertical and horizontal balance of characters may be lost, and deterioration in image quality such as visually blurred characters and partially thickened characters may be caused. This is because there are a character area where thinning of the pixels constituting the image increases and a character area where thinning of the pixels constituting the image is absent or small.

Here, although techniques for preventing deterioration in the quality of the output image are generally known, there is no known technique for eliminating the deterioration in image quality caused by reading a document at different resolutions in the scanning directions.

In contrast, in the above-described embodiment, the thinning of pixels in these character areas is decreased by increasing the density of low-density character areas and the thinning of pixels in these character areas is increased by decreasing the density of high-density character areas, such that it is possible to bring the thinning of both character areas closer together and reduce the difference in the reproducibility of details between the main scanning direction and the sub-scanning direction. Therefore, according to the present embodiment, when the file size is reduced by reading a document at different resolutions in accordance with the scanning direction and the image of the document is output after high-resolution conversion is performed to make the resolutions in both scanning directions the same, it is possible to suppress deterioration in the quality of the output image.

The present invention is not limited to the above-described embodiment and various modifications are possible. Moreover, in the above-described embodiment, the configurations and processes shown in the above embodiment using FIGS. 1 to 6 are merely examples of the present invention, and the present invention is not limited to the configurations and processes.

## Claims

1. An image processing apparatus (1) comprising:
a document reading device (5) configured to read an image of a document at a different resolution in accordance with each of a main scanning direction and a sub-scanning direction;
an intermediate image generator (101) configured to generate intermediate image data with the same resolution in both scanning directions by performing resolution conversion on read image data obtained by reading the document with the document reading device (5);
a character area detector (102) configured to detect a character area within an image represented by the intermediate image data generated by the intermediate image generator (101);
an image corrector (104) configured to correct the intermediate image data by increasing a density of low-density character areas having a density lower than a predetermined reference density by a predetermined first density amount and decreasing a density of high-density character areas having a density higher than the reference density by a predetermined second density amount in the character area detected by the character area detector (102); and
an output image generator (105) configured to generate output image data by converting the resolution of the intermediate image data corrected by the image corrector (104) into a predetermined output resolution.

2. The image processing apparatus (1) according to claim 1,
wherein the image corrector (104) performs the correction of the intermediate image data on the basis of a predetermined input/output characteristic indicating a relationship between an input density value and an output density value,
wherein the input/output characteristic is set so that the output density value increases or remains the same without decreasing as the input density value increases,
wherein the input/output characteristic is set so that the output density value is greater than the input density value and less than the reference density when the input density value is less than the reference density, and
wherein the input/output characteristic is set so that the output density value is less than the input density value and greater than the reference density when the input density value is greater than the reference density.

3. The image processing apparatus (1) according to claim 2, further comprising an image processor configured to perform an edge enhancement process on the character area in the intermediate image data and perform a smoothing process on areas other than the character area detected by the character area detector (102),
wherein the image corrector (104) performs the correction on the intermediate image data after image processing by the image processor.

4. The image processing apparatus (1) according to claim 1,
wherein the intermediate image generator (101) generates the intermediate image data by performing resolution conversion for converting the resolution of the read image data in the other scanning direction according to the smaller of the resolution of the read image data in the main scanning direction and the resolution of the read image data in the sub-scanning direction, and
wherein the output image generator (105) converts the resolution of the intermediate image data by designating the larger of the resolution of the read image data in the main scanning direction and the resolution of the read image data in the sub-scanning direction as the predetermined output resolution.

5. The image processing apparatus (1) according to claim 1, wherein the output image generator (105) generates the output image data by converting the resolution of the intermediate image data corrected by the image corrector (104) into the predetermined output resolution according to a predetermined gradation processing technique.

6. An image forming apparatus (1) comprising:
the image processing apparatus (1) according to any one of claims 1 to 4; and
an image forming device configured to form an image on a recording medium on the basis of the output image data generated by the output image generator (105).
